# EUROPEAN PATENT APPLICATION

(11) **EP 4 807 394 A1**
(43) Date of publication of application: **16.09.2026**
(21) Application number: 25192040.1
(22) Date of filing: 28.07.2025
(51) Int. Cl.: G01S 7/497, G01S 17/42

(54) **CALIBRATION SYSTEM AND CALIBRATION METHOD**

(30) Priority: 14.03.2025 JP 2025041932
(71) Applicant: FUJIFILM Business Innovation Corp., Minato-ku Tokyo (JP)
(72) Inventor: MORITA, Yohei, Ebina-shi, Kanagawa (JP); HOTTA, Hiroyuki, Ebina-shi, Kanagawa (JP); SAKAI, Kazuhiro, Ebina-shi, Kanagawa (JP); KIMURA, Rio, Ebina-shi, Kanagawa (JP); YAMAZAKI, Kenji, Ebina-shi, Kanagawa (JP); MATSUSHITA, Kazuyuki, Ebina-shi, Kanagawa (JP); HAYAKAWA, Junichiro, Ebina-shi, Kanagawa (JP)
(74) Representative: Becker Kurig & Partner Patentanwälte mbB

(57) **Abstract**

A calibration system includes: a first reflective member (52) that is fixed to an installation portion for a distance measurement device (20) and reflects light emitted from one light emitting portion among plural light emitting portions that are included in the distance measurement device (20) and are capable of emitting light in different directions; a second reflective member (54) that is fixed to a region different from a region, to which the first reflective member (52) is fixed, in the installation portion for the distance measurement device (20), has a distance from the light emitting portions that is different from a distance of the first reflective member, and reflects light emitted from another light emitting portion; and a processor configured to: cause the one light emitting portion and the other light emitting portion to emit light with a time difference and calibrate the distance measurement device (20) based on light reception results of a light receiving unit that receives reflected light by the first reflective member (52) and reflected light by the second reflective member (54). Reflective member (50) is a plate member that extends in the Y-axis direction and is curved along an arc having the optical system (40) as the center. An absorption member (60) can be arranged between the first reflective member (52) and the second reflective member (54) on the X-Z plane. A controller (70) may cause the light emitting regions to emit light with a time difference.

## Description

### BACKGROUND OF THE INVENTION

### (i) Field of the Invention

The present disclosure relates to a calibration system and a calibration method.

### (ii) Description of Related Art

JP2023-183315A discloses a light emitting device including: a light emitting unit that has a plurality of light emitting regions arranged in a first direction; and an optical system that is arranged in a light emission direction of the light emitting unit, deflects light emitted from each of the plurality of light emitting regions in different directions, and is configured such that an emission angle of light in a second direction intersecting the first direction is smaller than an emission angle of light in the first direction.

### SUMMARY OF THE INVENTION

The present disclosure provides a calibration system and a calibration method that reduce a time required for calibration, as compared to a configuration in which a reflective member is moved from a determined position to another determined position to calibrate a distance measurement device.

According to a first aspect of the present disclosure, there is provided a calibration system including: a first reflective member that is fixed to an installation portion for a distance measurement device and reflects light emitted from one light emitting portion among a plurality of light emitting portions that are included in the distance measurement device and are capable of emitting light in different directions; a second reflective member that is fixed to a region different from a region, to which the first reflective member is fixed, in the installation portion for the distance measurement device, has a distance from the light emitting portions that is different from a distance of the first reflective member, and reflects light emitted from another light emitting portion; and a processor configured to: cause the one light emitting portion and the other light emitting portion to emit light with a time difference and calibrate the distance measurement device based on light reception results of a light receiving unit that receives reflected light by the first reflective member and reflected light by the second reflective member.

According to a second aspect of the present disclosure, in the calibration system according to the first aspect, the distance measurement device may include a surface-emitting laser in which the plurality of light emitting portions are two-dimensionally arranged, and the first reflective member and the second reflective member may reflect light emitted from the light emitting portions that are arranged closer to a center than to an outer edge among the plurality of light emitting portions.

According to a third aspect of the present disclosure, in the calibration system according to the second aspect, the first reflective member may be fixed at a position that is farther away from the light emitting portion than the second reflective member and reflect light emitted from the light emitting portion that is closer to the center than the light emitting portion emitting light to the second reflective member.

According to a fourth aspect of the present disclosure, in the calibration system according to any one of the first to third aspects, the first reflective member and/or the second reflective member may be curved along an arc having, as a center, an optical system that deflects light emitted from the plurality of light emitting portions in different directions.

According to a fifth aspect of the present disclosure, the calibration system according to any one of the first to fourth aspects may further include an absorption member that is arranged between the first reflective member and the second reflective member and absorbs the reflected light.

According to a sixth aspect of the present disclosure, in the calibration system according to any one of the first to fifth aspects, a plurality of distance measurement devices may be capable of being installed in the installation portion to be arranged in a first direction, the first reflective member corresponding to each distance measurement device may be fixed to the installation portion along the first direction, and the second reflective member corresponding to each distance measurement device may be fixed to the installation portion along the first direction.

According to a seventh aspect of the present disclosure, in the calibration system according to the sixth aspect, the processor may be configured to cause the one light emitting portion and the other light emitting portion to emit light with a time difference for each distance measurement device installed in the installation portion.

According to an eighth aspect of the present disclosure, there is provided a calibration method including: causing a first reflective member that is fixed to an installation portion for a distance measurement device to reflect light emitted from one light emitting portion included in the distance measurement device as first reflected light; causing a second reflective member that is fixed to the installation portion for the distance measurement device to reflect light, which has been emitted from another light emitting portion included in the distance measurement device with a time difference with respect to the one light emitting portion, as second reflected light; and calibrating the distance measurement device based on light reception results of the first reflected light and the second reflected light by a light receiving unit.

According to the calibration system of the first aspect and the calibration method of the eighth aspect of the present disclosure, the time required for calibration is reduced as compared to a configuration in which the reflective member is moved from a determined position to another determined position to calibrate the distance measurement device.

According to the calibration system of the second aspect of the present disclosure, the accuracy of calibration is improved as compared to a configuration in which light emitted from the light emitting portion arranged at the outer edge among the plurality of light emitting portions is reflected.

According to the calibration system of the third aspect of the present disclosure, the accuracy of calibration is improved as compared to a configuration in which the first reflective member reflects light emitted from the light emitting portion that is closer to the outer edge than the light emitting portion emitting light to the second reflective member.

According to the calibration system of the fourth aspect of the present disclosure, the accuracy of calibration is improved as compared to a configuration in which the first reflective member and the second reflective member have a flat plate shape.

According to the calibration system of the fifth aspect of the present disclosure, it is possible to prevent the reflected light by one reflective member from being reflected again by another reflective member.

According to the calibration system of the sixth aspect of the present disclosure, the time required for the calibration of a plurality of distance measurement devices is reduced as compared to a configuration in which a single distance measurement device is installed in the installation portion.

According to the calibration system of the seventh aspect of the present disclosure, the accuracy of calibration is improved as compared to a configuration in which, after one light emitting portion in all of the distance measurement devices is caused to emit light, another light emitting portion in all of the distance measurement devices is caused to emit light.

### BRIEF DESCRIPTION OF THE DRAWINGS

Exemplary embodiment(s) of the present invention will be described in detail based on the following figures, wherein:
FIG. 1 is a front view showing a calibration system according to the present exemplary embodiment;
FIG. 2 is a diagram showing a schematic configuration of an optical distance measurement device;
FIG. 3 is a diagram showing a schematic configuration of a VCSEL array;
FIG. 4 is an X-Z plane projection diagram showing a configuration of an optical system;
FIG. 5 is a block diagram showing a controller;
FIG. 6 is a side view showing the calibration system in a state in which three optical distance measurement devices are arranged in a line in the Y-axis direction in the installation portion at an installation position;
FIG. 7 is a side view showing the calibration system in a state in which the three optical distance measurement devices are arranged in a line in the Y-axis direction in the installation portion at a calibration position;
FIG. 8 is a side view showing an example of a state in which the plurality of optical distance measurement devices are calibrated at the calibration position;
FIG. 9 is a flowchart showing execution of calibration by the controller;
FIG. 10 is a front view showing a first modification example of the present exemplary embodiment;
FIG. 11 is a plan view schematically showing a VCSEL array according to a second modification example of the present exemplary embodiment;
FIG. 12 is a front view showing the second modification example of the present exemplary embodiment;
FIG. 13 is a perspective view showing the second modification example of the present exemplary embodiment; and
FIG. 14 is a front view showing another modification example of the present exemplary embodiment.

### DETAILED DESCRIPTION OF THE INVENTION

### <Calibration System>

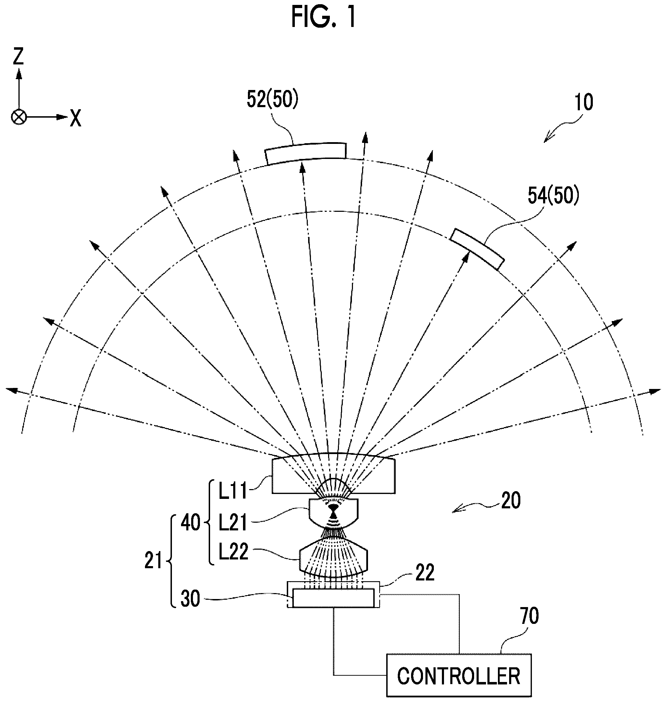

Hereinafter, an exemplary embodiment (the present exemplary embodiment) of the present disclosure will be described in detail with reference to the accompanying drawings. FIG. 1 is a front view showing a calibration system 10 according to the present exemplary embodiment. An X-axis, a Y-axis, and a Z-axis in FIG. 1 indicate coordinate axes in the calibration system 10. An X-axis direction is a horizontal direction and indicates a width direction of the calibration system, a Y-axis direction is a horizontal direction and indicates a depth direction of the calibration system, and a Z-axis direction is a vertical direction and indicates an up-down direction of the calibration system. The Y-axis direction is an example of a first direction.

The calibration system 10 includes a reflective member 50. The calibration system 10 calibrates an optical distance measurement device 20 using the reflective member 50. The optical distance measurement device 20 is an example of a distance measurement device.

In the present exemplary embodiment, an outline of the optical distance measurement device 20 to be calibrated by the calibration system 10 will be described, and then the calibration system 10 will be described in detail.

### [Configuration of Optical Distance Measurement Device]

The optical distance measurement device 20 is installed, for example, in front of an image forming apparatus (not shown). In the image forming apparatus, the optical distance measurement device 20 is installed as a human sensor for detecting a user who uses the image forming apparatus. In addition, in the image forming apparatus, for example, control is performed to detect the user who uses the image forming apparatus, using the optical distance measurement device 20, and to return the image forming apparatus from a power saving state to a normal operation state.

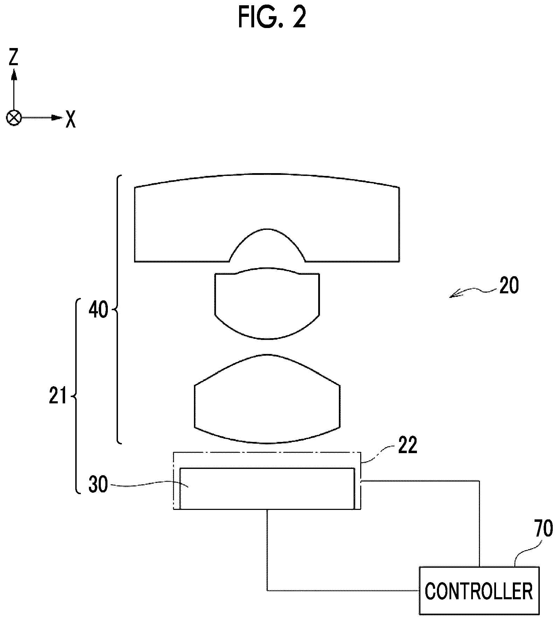

As shown in FIG. 2, the optical distance measurement device 20 includes a light emitting device 21, a light receiving unit 22, and a controller 70.

### [[Light Emitting Device]]

The light emitting device 21 emits light for measurement. The light emitting device 21 includes a VCSEL array 30 and an optical system 40.

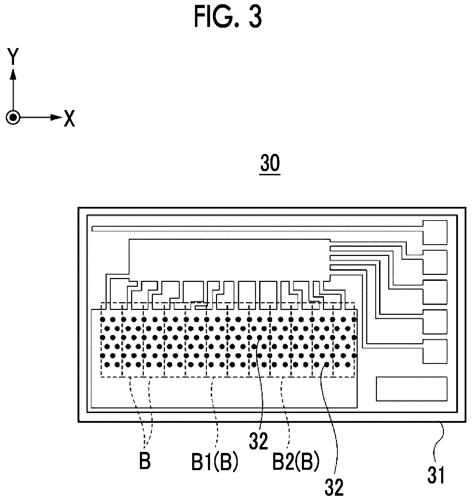

FIG. 3 is a diagram showing a schematic configuration of the VCSEL array 30. As shown in FIG. 3, the VCSEL array 30 has a configuration in which a plurality of light emitting elements 32 of a vertical cavity surface emitting laser (VCSEL) type are arranged in a staggered manner at equal intervals on a substrate 31. The VCSEL array 30 is an example of a surface-emitting laser.

The VCSEL array 30 has a plurality of light emitting regions B that are arranged along the X-axis direction. In other words, the VCSEL array 30 is a surface-emitting laser in which a plurality of light emitting regions B are two-dimensionally arranged. The plurality of light emitting regions B are an example of a plurality of light emitting portions that are included in the distance measurement device and can emit light in different directions.

In addition, the VCSEL array 30 is configured such that one light emitting region B has a plurality of light emitting elements 32 and the number of light emitting elements 32 in the Y-axis direction is larger than the number of light emitting elements 32 in the X-axis direction in one light emitting region B. In addition, the light emitting region B is configured in a rectangular shape in which a length in the Y-axis direction is longer than a length in the X-axis direction. Since the plurality of light emitting regions B are arranged in the X-axis direction, the plurality of light emitting regions B included in the VCSEL array 30 are configured in a rectangular shape, in which the length in the X-axis direction is longer than the length in the Y-axis direction, as a whole. The controller 70 controls the turn-on or turn-off of the light emitting element 32 for each light emitting region B in the VCSEL array 30.

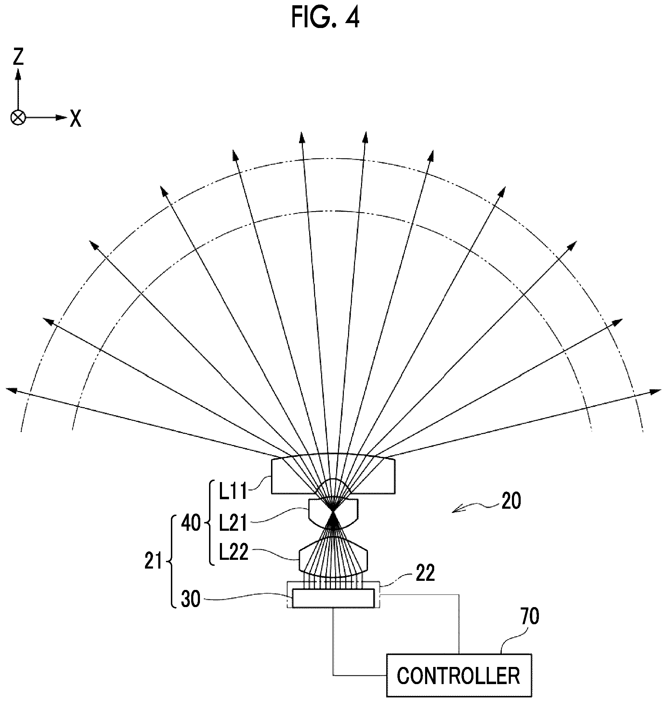

FIG. 4 is an X-Z plane projection diagram showing a configuration of the optical system 40. In FIG. 4, a lower side is a light emission side and an upper side is a light incidence side. In addition, the VCSEL array 30 indicates a position with respect to the optical system 40. Further, an optical path of light beams emitted from the VCSEL array 30 is also shown in FIG. 4. In the present exemplary embodiment, for convenience of description, the optical path is represented by 12 solid lines.

The optical system 40 is an optical system that is arranged in a light emission direction of the VCSEL array 30 and deflects light emitted from each of the plurality of light emitting regions B in different directions. In the present exemplary embodiment, the optical system 40 is composed of, for example, three lenses of a lens L11, a lens L21, and a lens L22. In addition, in the present exemplary embodiment, the optical system 40 has a curvature in the X-axis direction and the Y-axis direction (not shown).

### [[Light Receiving Unit]]

The light receiving unit 22 detects reflected light of the light emitted from the light emitting device 21. The light receiving unit 22 is arranged below the lens L22 to overlap the VCSEL array 30 in the Y-axis direction.

### [[Controller]]

The controller 70 controls the operation of the VCSEL array 30 and the light receiving unit 22 and performs a process of calculating a distance from the VCSEL array 30 to an object to be measured, for example, the reflective member 50 (see FIG. 1) based on a signal detected by the light receiving unit 22.

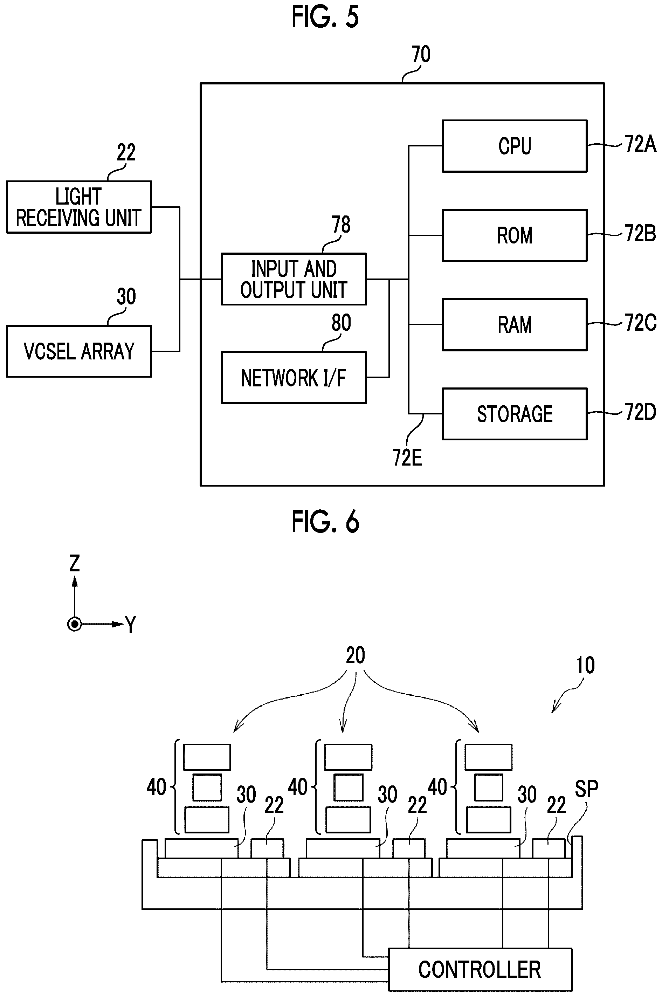

As shown in FIG. 5, the controller 70 includes each component of a central processing unit (CPU) 72A, a read only memory (ROM) 72B, a random access memory (RAM) 72C, a storage 72D, an input and output unit 78, and a network interface (network I/F) 80. These configurations are connected to be capable of communicating with each other via a bus 72E.

The CPU 72A is a central processing unit and executes various programs or controls each unit. That is, the CPU 72A reads out a program from the ROM 72B or the storage 72D and executes the program using the RAM 72C as a work area. The CPU 72A is an example of a processor. The CPU 72A controls each configuration and performs various types of arithmetic processing according to the program recorded in the ROM 72B or the storage 72D.

The ROM 72B stores various programs and various types of data. The RAM 72C temporarily stores programs, light reception results, and other data as the work area. The storage 72D is configured as a hard disk drive (HDD) or a solid state drive (SSD) and stores various programs including an operating system and various types of data.

The input and output unit 78 receives signals of the VCSEL array 30 and the light receiving unit 22.

The network I/F 80 is an interface for communicating with other apparatuses such as a database and a server (not illustrated). For example, a standard, such as Ethernet (registered trademark), FDDI, or Wi-Fi (registered trademark), is used.

Specifically, as shown in FIG. 3, the controller 70 controls the VCSEL array 30 such that light is sequentially emitted from the plurality of light emitting regions B arranged along the X-axis direction from one side to perform scanning in the X-axis direction. Then, the controller 70 causes the light receiving unit 22 to detect the reflected light of the light emitted from each light emitting region B. Then, the controller 70 calculates a time difference between the timing when the light is emitted from each light emitting region B and the timing when the reflected light is detected by the light receiving unit 22, based on the signal detected in the light receiving unit 22. Then, the controller 70 calculates the distance from the light emitting device 21 to the object to be measured in a detection range corresponding to each light emitting region B, based on the calculated time difference. Major components of the controller 70 in the calibration system 10 will be described below.

### [Calibration of Optical Distance Measurement Device]

The calibration of the optical distance measurement device 20 will be described. The optical distance measurement device 20 has an error in the calculated distance. That is, the optical distance measurement device 20 has individual differences. In a process of manufacturing the optical distance measurement device 20, the optical distance measurement device 20 is shipped after the individual differences are calibrated.

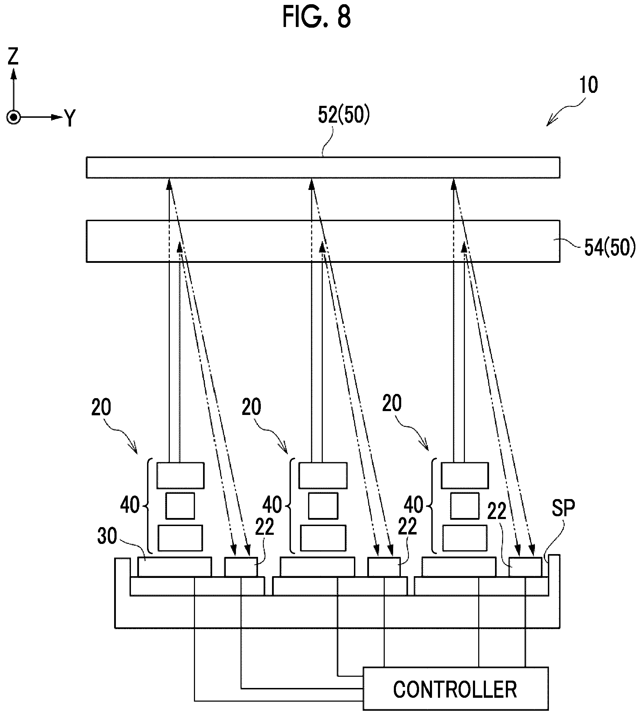

Details of the calibration system 10 according to the present exemplary embodiment will be described. As shown in FIG. 8, the calibration system 10 calibrates a plurality of optical distance measurement devices 20 installed in a tray-shaped installation portion SP. In the present exemplary embodiment, the calibration system 10 calibrates three optical distance measurement devices 20 installed in the installation portion SP to be arranged in a line in the Y-axis direction.

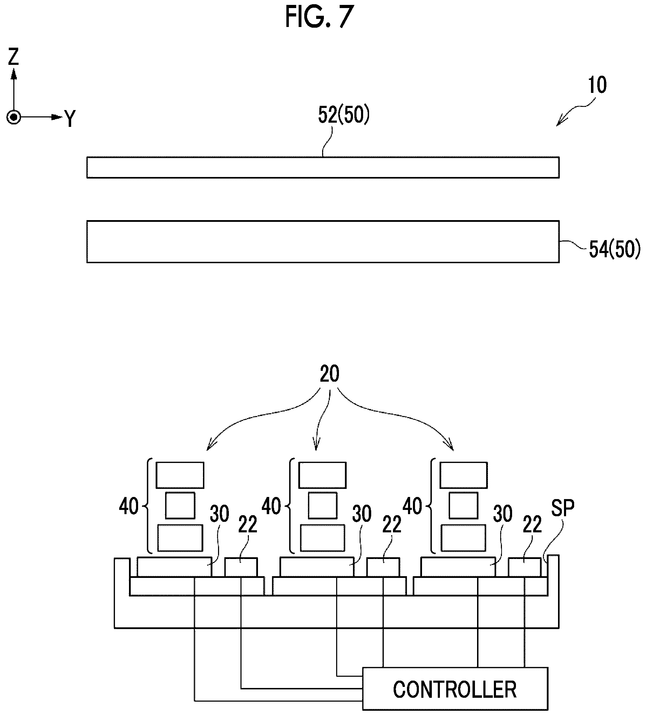

As shown in FIG. 6, the calibration system 10 can have an installation position where the optical distance measurement device 20 can be installed in the installation portion SP and a calibration position where the optical distance measurement device 20 installed in the installation portion SP can be calibrated as shown in FIG. 7. Next, the major components of the reflective member 50 and the controller 70 in the calibration system 10 will be described.

### (Reflective Member)

As shown in FIG. 7, the reflective member 50 is a plate member that extends in the Y-axis direction and is formed in an arc shape on the X-Z plane as shown in FIG. 1. Specifically, the reflective member 50 is curved along an arc having the optical system 40 as the center. The arc having the optical system 40 as the center includes an arc that has the center in any of the lenses L11, L21, and L22 or an arc that has the center between the lens L11 and the lens L21 or between the lens L21 and the lens L22.

In addition, as shown in FIG. 7, a plurality of reflective members 50 are arranged above the optical distance measurement devices 20 such that the reflective member 50 covers three optical distance measurement devices 20 as an integrated body common to all of the optical distance measurement devices 20, and are fixed to the installation portion SP by brackets (not shown). As shown in FIG. 8, the reflective member 50 reflects the light emitted from the light emitting device 21 to the light receiving unit 22. Specifically, the reflective member 50 reflects the light emitted from the light emitting region B1 or B2, which is arranged closer to the center than to the outer edge in the X-axis direction, among the plurality of light emitting regions B in the VCSEL array 30 to the light receiving unit 22 (see FIG. 3). The reflective member 50 includes a first reflective member 52 and a second reflective member 54.

As shown in FIG. 1, the first reflective member 52 is arranged at a position corresponding to a central portion of the VCSEL array 30 in the X-axis direction. The first reflective member 52 reflects the light emitted from the light emitting region B1 of the VCSEL array 30. The light emitting region B1 is a region that is closer to the center than to the outer edge in the X-axis direction (see FIG. 3).

The second reflective member 54 is arranged at a position corresponding to the outer side of the central portion of the VCSEL array 30 in the X-axis direction. In addition, the second reflective member 54 is arranged closer to the light emitting device 21 than the first reflective member 52 in the Z-axis direction. Specifically, the second reflective member 54 is arranged to have a distance from the VCSEL array 30 that is different from the distance of the first reflective member 52 from the VCSEL array 30. That is, the second reflective member 54 is arranged in a region different from the region in which the first reflective member 52 is arranged. The second reflective member 54 reflects the light emitted from the light emitting region B2. The light emitting region B2 is a region that is closer to the center than to the outer edge in the X-axis direction and is different from the light emitting region B1 (see FIG. 3).

### (Major Components of Processor)

The controller 70 can control the operation of each optical distance measurement device 20 in addition to the above-described functions. As shown in FIG. 6, the controller 70 is connected to the VCSEL array 30 and the light receiving unit 22 of each optical distance measurement device 20.

The controller 70 can adjust the timing and duration of light emission from the light emitting region B in each VCSEL array 30. For example, the controller 70 causes the light emitting region B1 and the light emitting region B2 in one VCSEL array 30 to emit light with a time difference and then causes the light emitting region B1 and the light emitting region B2 in another VCSEL array 30 to emit light with a time difference. That is, the controller 70 causes the light emitting region B1 and the light emitting region B2 to emit light with a time difference for each optical distance measurement device 20 installed in the installation portion SP. In the present exemplary embodiment, as shown in FIG. 8, the controller 70 causes the light emitting region B1 and the light emitting region B2 to emit light with a time difference, starting from the optical distance measurement device 20 on one side in the Y-axis direction.

In addition, the controller 70 calculates the distance to each reflective member 50 based on the light reception results of each light receiving unit 22. For example, the controller 70 calculates the distances to the first reflective member 52 and the second reflective member 54 corresponding to one light receiving unit 22, based on the light reception results of each reflected light component from the first reflective member 52 and the second reflective member 54 by the one light receiving unit 22. Then, the controller 70 calculates the distances to the first reflective member 52 and the second reflective member 54 corresponding to another light receiving unit 22, based on the light reception results of each reflected light component from the first reflective member 52 and the second reflective member 54 by another light receiving unit 22.

Then, the controller 70 calibrates each optical distance measurement device 20 based on the calculated distances. For example, the calibration is performed by determining a calibration value based on a difference between the calculated distance and the determined distance and multiplying the calculated distance by the calibration value.

### (Flowchart)

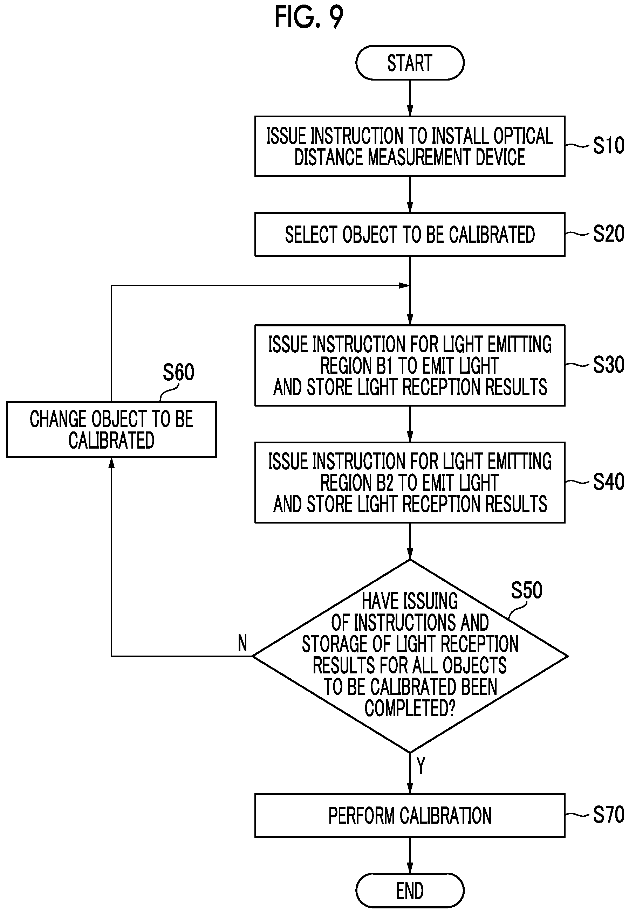

Next, the execution of the calibration by the controller 70 will be described with reference to FIG. 9.

In Step S10, the CPU 72A of the controller 70 issues an instruction to install a required number of optical distance measurement devices 20 in the installation portion SP. The instruction is performed by a voice instruction by a speaker (not shown), display on a display unit (not shown), or the like. Then, the CPU 72A proceeds to Step S20.

In Step S20, the CPU 72A selects the optical distance measurement device 20 installed in the installation portion SP as an object to be calibrated. In the present exemplary embodiment, first, the CPU 72A selects, as the object to be calibrated, the optical distance measurement device 20 on one side in the Y-axis direction among the three optical distance measurement devices 20 as shown in FIG. 7. Then, the CPU 72A proceeds to Step S30.

In Step S30, the CPU 72A instructs the VCSEL array 30 of the optical distance measurement device 20 to emit light from the light emitting region B1. In addition, the CPU 72A stores the light reception results of the reflected light from the first reflective member 52 by the light receiving unit 22 in the RAM 72C. Then, the CPU 72A proceeds to Step S40.

In Step S40, the CPU 72A instructs the VCSEL array 30 of the optical distance measurement device 20 to emit light from the light emitting region B2. In addition, the CPU 72A stores the light reception results of the reflected light from the second reflective member 54 by the light receiving unit 22 in the RAM 72C. Then, the CPU 72A proceeds to Step S50.

In Step S50, the CPU 72A determines whether or not the issuing of the light emission instructions and the storage of the light reception results for all of the objects to be calibrated have been completed.

In a case where the determination result is "N", the CPU 72A proceeds to Step S60. Then, the CPU 72A continues the flow until the storage of the light emission instructions and the light reception results for all of the objects to be calibrated is completed.

On the other hand, in a case where the determination result is "Y", the CPU 72A proceeds to Step S70.

In Step S70, the CPU 72A calibrates the optical distance measurement device 20 based on the light reception results. Then, the CPU 72A ends the flow.

### (Calibration Method)

A calibration method according to the present exemplary embodiment will be described with reference to FIGS. 3 and 8.

The light emitted from the light emitting region B1 of the VCSEL array 30 included in the optical distance measurement device 20 is reflected as first reflected light from the first reflective member 52 fixed to the installation portion SP for the optical distance measurement device 20.

Then, the light emitted from the light emitting region B2 of the VCSEL array 30 with a time difference with respect to the light emitting region B1 is reflected as second reflected light from the second reflective member 54 fixed to the installation portion SP.

Then, the optical distance measurement device 20 is calibrated based on the light reception results of the first reflected light and the second reflected light received by the light receiving unit 22 of the optical distance measurement device 20.

The optical distance measurement device 20 according to the present exemplary embodiment is calibrated by the above-described method.

### <Operation and Effect>

The calibration system 10 according to the present exemplary embodiment includes: the first reflective member 52 that is fixed to the installation portion SP for the optical distance measurement device 20 and reflects light emitted from the light emitting region B1 among a plurality of light emitting regions B that are included in the optical distance measurement device 20 and are capable of emitting light in different directions; the second reflective member 54 that is fixed to a region different from the region, to which the first reflective member 52 is fixed, in the installation portion SP, has a distance from the light emitting region B that is different from the distance of the first reflective member 52, and reflects light emitted from the light emitting region B2; and the CPU 72A of the controller 70. The CPU 72A causes the light emitting region B1 and the light emitting region B2 to emit light with a time difference and calibrates the optical distance measurement device 20 based on light reception results of reflected light from the first reflective member 52 and reflected light from the second reflective member 54 by the light receiving unit 22.

According to the configuration, the time required for calibration is reduced as compared to a configuration in which the reflective member is moved from a determined position to another determined position to calibrate the optical distance measurement device.

In addition, in the calibration system 10 according to the present exemplary embodiment, the optical distance measurement device 20 includes the VCSEL array 30 that is a surface-emitting laser in which a plurality of light emitting regions B are two-dimensionally arranged, and the first reflective member 52 and the second reflective member 54 reflect the light emitted from the light emitting regions B1 and B2 that are arranged closer to the center than to the outer edge among the plurality of light emitting regions B.

According to the configuration, the accuracy of calibration is improved as compared to a configuration in which light emitted from the light emitting region arranged at the outer edge among the plurality of light emitting regions B is reflected.

In addition, in the calibration system 10 according to the present exemplary embodiment, the first reflective member 52 is fixed to a position that is farther away from the light emitting region B than the second reflective member 54 and reflects light emitted from the light emitting region B1 that is closer to the center than the light emitting region B2 emitting light to the second reflective member 54.

According to the configuration, the accuracy of calibration is improved as compared to a configuration in which the first reflective member 52 reflects the light emitted from the light emitting region B that is closer to the outer edge than the light emitting region B2 emitting light to the second reflective member 54.

Further, in the calibration system 10 according to the present exemplary embodiment, the first reflective member 52 and the second reflective member 54 are curved along an arc having, as the center, the optical system 40 that deflects the light emitted from the plurality of light emitting regions B in different directions.

According to the configuration, the accuracy of calibration is improved as compared to a configuration in which the first reflective member and the second reflective member have a flat plate shape.

Furthermore, in the calibration system 10 according to the present exemplary embodiment, three optical distance measurement devices 20 are installed in a line along the Y-axis direction in the installation portion SP. Furthermore, the first reflective member 52 and the second reflective member 54, each of which is an integrated body common to the three optical distance measurement devices 20, are fixed to the installation portion SP along the Y-axis direction above the three optical distance measurement devices 20.

According to the configuration, the time required for the calibration of the plurality of optical distance measurement devices 20 is reduced as compared to a configuration in which the single optical distance measurement device 20 is installed in the installation portion SP.

Moreover, in the calibration system 10 according to the present exemplary embodiment, the CPU 72A of the controller 70 causes the light emitting region B1 and the light emitting region B2 to emit light with a time difference for each optical distance measurement device 20 installed in the installation portion SP.

According to the configuration, the accuracy of calibration is improved as compared to a configuration in which, after one light emitting region in all of the optical distance measurement devices is caused to emit light, another light emitting region in all of the optical distance measurement devices is caused to emit light.

In addition, a calibration method according to the present exemplary embodiment includes: causing the first reflective member 52 that is fixed to the installation portion SP to reflect light emitted from the light emitting region B1 included in the optical distance measurement device 20 as the first reflected light; causing the second reflective member 54 that is fixed to the installation portion SP to reflect light, which has been emitted from the light emitting region B2 included in the optical distance measurement device 20 with a time difference with respect to the light emitting region B1, as the second reflected light; and calibrating the optical distance measurement device 20 based on light reception results of the first reflected light and the second reflected light by the light receiving unit 22.

According to the calibration method, the time required for calibration is reduced as compared to a configuration in which the reflective member is moved from a determined position to another determined position to calibrate the optical distance measurement device.

### <Modification Examples>

The specific exemplary embodiment of the present disclosure has been described in detail above. However, the present disclosure is not limited to the exemplary embodiment, and it will be apparent to those skilled in the art that various other embodiments can be implemented within the scope of the present disclosure.

Hereinafter, modification examples of the above-described exemplary embodiment will be described. In the following modification examples, the basic configuration is the same as the basic configuration of the above-described exemplary embodiment unless otherwise specified. In the modification examples, the description and showing of the same configuration and function as the configuration and function of the above-described exemplary embodiment may be omitted.

### (First Modification Example)

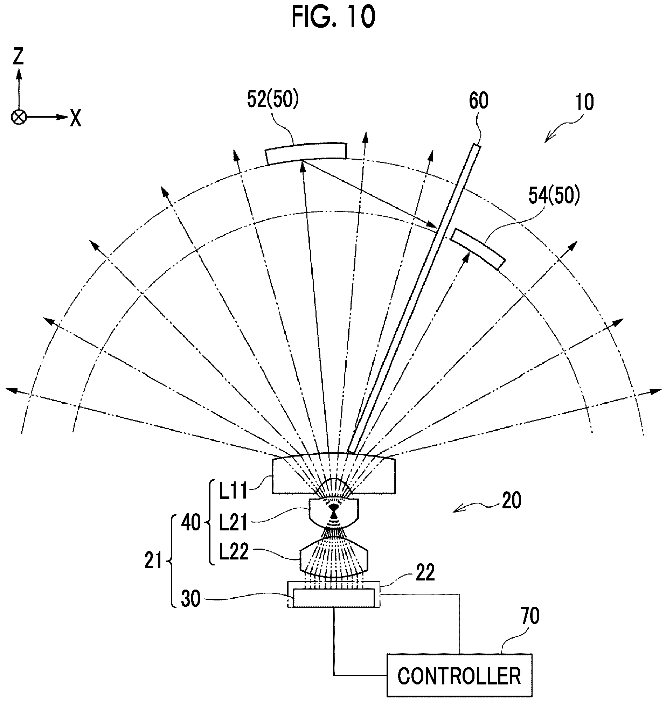

A first modification example, which is one of the modification examples, will be described with reference to FIG. 10. The first modification example is different from the above-described exemplary embodiment in that an absorption member 60 is added.

In a calibration system according to the first modification example, the absorption member 60 is arranged between the first reflective member 52 and the second reflective member 54 on the X-Z plane. The absorption member 60 extends radially from the lens L11 of the optical system 40 on the X-Z plane. In addition, the absorption member 60 extends beyond the distance from the lens L11 to the first reflective member 52 on the X-Z plane. The absorption member 60 absorbs the reflected light from the reflective member 50. The absorption member 60 is formed by, for example, a method that colors a base material black or a method that attaches a black film to the base material.

The calibration makes it possible to prevent the reflected light by one reflective member from being reflected again by another reflective member.

### (Second Modification Example)

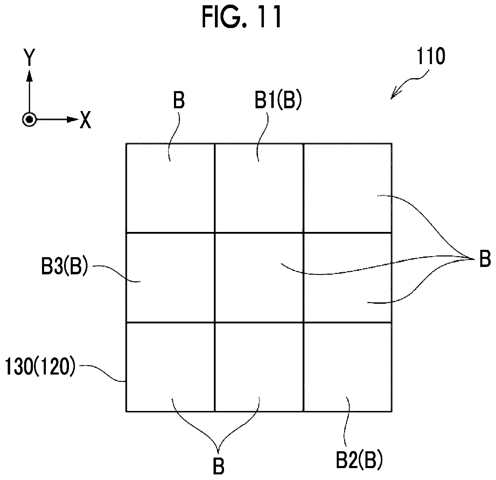

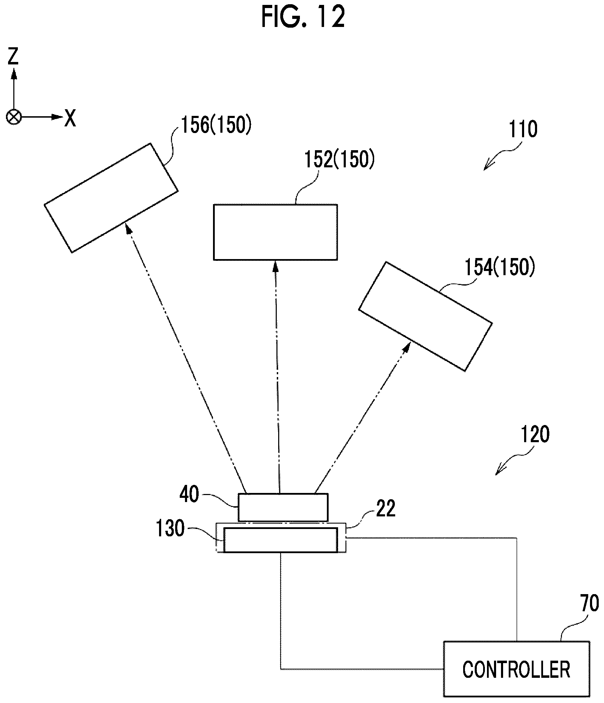

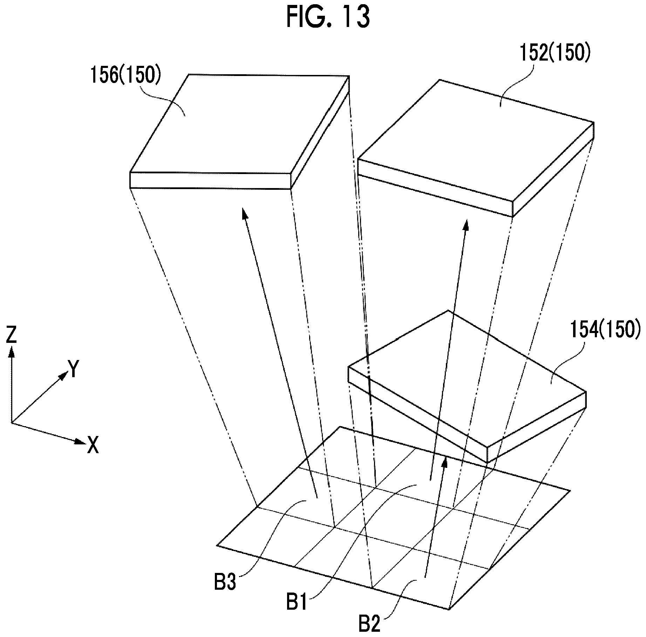

In addition, a second modification example, which is one of the modification examples, will be described with reference to FIG. 11. In the above-described exemplary embodiment, the optical distance measurement device 20 including the VCSEL array 30 in which the plurality of light emitting regions B are arranged in a line in the X-axis direction has been described (see FIG. 3). In the second modification example, an optical distance measurement device 120 including a VCSEL array 130 in which a plurality of light emitting regions B are arranged in a 3 × 3 matrix is used. In addition, a calibration system 110 according to the second modification example includes a reflective member 150 as shown in FIG. 12. As shown in FIG. 13, a first reflective member 152 reflects light emitted from a light emitting region B1. A second reflective member 154 is arranged in a region different from the region in which the first reflective member 152 is arranged and reflects light emitted from a light emitting region B2. A third reflective member 156 is arranged in a region different from the regions in which the first reflective member 152 and the second reflective member 154 are arranged, and reflects light emitted from a light emitting region B3.

According to the configuration, it is possible to increase variations of the objects to be calibrated, as compared to a configuration in which only the optical distance measurement device 20 including the VCSEL array in which the light emitting regions B are arranged in a line is calibrated.

### (Other Modification Examples)

In the above-described exemplary embodiment, the plurality of optical distance measurement devices 20 can be installed in the installation portion SP of the calibration system 10. However, the present disclosure is not limited thereto. Only a single optical distance measurement device 20 may be installable in the installation portion SP.

In the above-described exemplary embodiment, the optical distance measurement device 20 is installed in the image forming apparatus. However, the present disclosure is not limited thereto. For example, the optical distance measurement device 20 may be installed in a gate for detecting pedestrians or other apparatuses requiring human detection.

In the above-described exemplary embodiment, the light emitting device 21 includes the VCSEL array 30. However, the present disclosure is not limited thereto as long as the light emitting device 21 includes a plurality of light emitting regions B. The light emitting device 21 may be, for example, an LED array.

In the above-described exemplary embodiment, the reflective member 50 extends in the Y-axis direction and is arranged as a common integrated body above the optical distance measurement device 20 to cover three optical distance measurement devices 20. However, the present disclosure is not limited thereto. For example, a plurality of first reflective members 52 that are separated from each other in the Y-axis direction and a plurality of second reflective members 54 that are separated from each other in the Y-axis direction may be fixed to the installation portion SP along the Y-axis direction. In this case, for example, it is preferable that the first reflective members 52 and the second reflective members 54 are associated with each other for each optical distance measurement device 20.

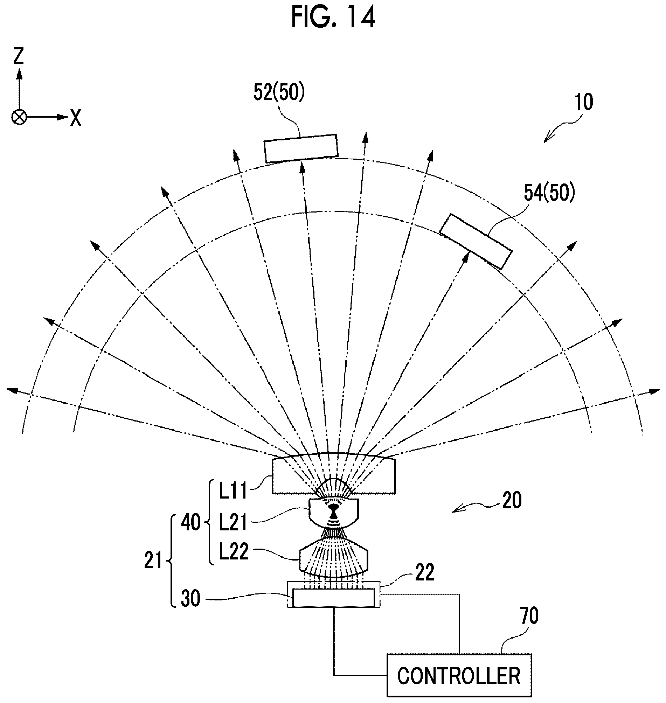

Each of the first reflective member 52 and the second reflective member 54 included in the reflective members 50 is a plate material that is formed in an arc shape on the X-Z plane. However, the present disclosure is not limited thereto. For example, any one of the first reflective member 52 or the second reflective member 54 may be the plate material formed in the arc shape on the X-Z plane. In addition, as shown in FIG. 14, the reflective member 50 may be a plate material that is formed in a rectangular shape on the X-Z plane.

Further, the first reflective member 52 and the second reflective member 54 reflect the light emitted from the light emitting regions B1 and B2 that are arranged closer to the center than to the outer edge among the plurality of light emitting regions B. However, the present disclosure is not limited thereto. For example, the first reflective member 52 and the second reflective member 54 may reflect light emitted from the light emitting regions B arranged at the outer edge.

Furthermore, the first reflective member 52 is fixed to a position that is farther away from the light emitting region B than the second reflective member 54 and reflects the light emitted from the light emitting region B1 that is closer to the center than the light emitting region B2 emitting light to the second reflective member 54. However, the present disclosure is not limited thereto. For example, the first reflective member 52 may be fixed together with the second reflective member 54 at a determined position from the light emitting region B. In addition, for example, the first reflective member 52 may reflect light emitted from the light emitting region B that is closer to the outer edge than the light emitting region B2.

In the above-described exemplary embodiment, the controller 70 causes the light emitting regions B1 and B2 to emit light with a time difference, starting from the optical distance measurement device 20 on one side in the Y-axis direction. However, the present disclosure is not limited thereto.

For example, the controller 70 may cause the optical distance measurement devices 20 to emit light in order, starting from the optical distance measurement device 20 on the other side in the Y-axis direction, or may cause the optical distance measurement device 20 on one side, the optical distance measurement device 20 on the other side, and the optical distance measurement device 20 at the center to emit light in that order.

For example, the controller 70 may cause the light emitting regions B1 of the VCSEL arrays 30 in all of the optical distance measurement devices 20 to emit light and then cause the light emitting regions B2 of the VCSEL arrays 30 in all of the optical distance measurement devices 20 to emit light. In this case, in a case where all of the light emitting regions B1 are caused to emit light at the same time and then all of the light emitting regions B2 are caused to emit light at the same time, the calibration time is reduced as compared to a configuration in which a plurality of light emitting regions B1 are caused to sequentially emit light and then a plurality of light emitting regions B2 are caused to sequentially emit light.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. In addition, the program of the present application may be provided as a program product.

### (Supplementary Notes)

(((1))) A calibration system comprising:
   a first reflective member that is fixed to an installation portion for a distance measurement device and reflects light emitted from one light emitting portion among a plurality of light emitting portions that are included in the distance measurement device and are capable of emitting light in different directions;
   a second reflective member that is fixed to a region different from a region, to which the first reflective member is fixed, in the installation portion for the distance measurement device, has a distance from the light emitting portions that is different from a distance of the first reflective member, and reflects light emitted from another light emitting portion; and
   a processor configured to:
      cause the one light emitting portion and the other light emitting portion to emit light with a time difference and calibrate the distance measurement device based on light reception results of a light receiving unit that receives reflected light by the first reflective member and reflected light by the second reflective member.
(((2))) The calibration system according to (((1))),
   wherein the distance measurement device includes a surface-emitting laser in which the plurality of light emitting portions are two-dimensionally arranged, and
   the first reflective member and the second reflective member reflect light emitted from the light emitting portions that are arranged closer to a center than to an outer edge among the plurality of light emitting portions.
(((3))) The calibration system according to (((2))),
   wherein the first reflective member is fixed at a position that is farther away from the light emitting portion than the second reflective member and reflects light emitted from the light emitting portion that is closer to the center than the light emitting portion emitting light to the second reflective member.
(((4))) The calibration system according to any one of (((1))) to (((3))),
   wherein the first reflective member and/or the second reflective member is curved along an arc having, as a center, an optical system that deflects light emitted from the plurality of light emitting portions in different directions.
(((5))) The calibration system according to any one of (((1))) to (((4))), further comprising:
   an absorption member that is arranged between the first reflective member and the second reflective member and absorbs the reflected light.
(((6))) The calibration system according to any one of (((1))) to (((5))),
   wherein a plurality of distance measurement devices are capable of being installed in the installation portion to be arranged in a first direction,
   the first reflective member corresponding to each distance measurement device is fixed to the installation portion along the first direction, and
   the second reflective member corresponding to each distance measurement device is fixed to the installation portion along the first direction.
(((7))) The calibration system according to (((6))), wherein the processor is configured to:
   cause the one light emitting portion and the other light emitting portion to emit light with a time difference for each distance measurement device installed in the installation portion.
(((8))) A calibration method comprising:
   causing a first reflective member that is fixed to an installation portion for a distance measurement device to reflect light emitted from one light emitting portion included in the distance measurement device as first reflected light;
   causing a second reflective member that is fixed to the installation portion for the distance measurement device to reflect light, which has been emitted from another light emitting portion included in the distance measurement device with a time difference with respect to the one light emitting portion, as second reflected light; and
   calibrating the distance measurement device based on light reception results of the first reflected light and the second reflected light by a light receiving unit.

According to the calibration system of (((1))), the time required for calibration is reduced as compared to a configuration in which the reflective member is moved from a determined position to another determined position to calibrate the distance measurement device.

According to the calibration system of (((2))), the accuracy of calibration is improved as compared to a configuration in which light emitted from the light emitting portion arranged at the outer edge among the plurality of light emitting portions is reflected.

According to the calibration system of (((3))), the accuracy of calibration is improved as compared to a configuration in which the first reflective member reflects light emitted from the light emitting portion that is closer to the outer edge than the light emitting portion emitting light to the second reflective member.

According to the calibration system of (((4))), the accuracy of calibration is improved as compared to a configuration in which the first reflective member and the second reflective member have a flat plate shape.

According to the calibration system of (((5))), it is possible to prevent the reflected light by one reflective member from being reflected again by another reflective member.

According to the calibration system of (((6))), the time required for the calibration of a plurality of distance measurement devices is reduced as compared to a configuration in which a single distance measurement device is installed in the installation portion.

According to the calibration system of (((7))), the accuracy of calibration is improved as compared to a configuration in which, after one light emitting portion in all of the distance measurement devices is caused to emit light, another light emitting portion in all of the distance measurement devices is caused to emit light.

According to the calibration method of (((8))), the time required for calibration is reduced as compared to a configuration in which the reflective member is moved from a determined position to another determined position to calibrate the distance measurement device.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: calibration system
20: optical distance measurement device (example of distance measurement device)
21: light emitting device
22: light receiving unit
30: VCSEL array
32: light emitting element
40: optical system
50: reflective member
52: first reflective member
54: second reflective member
60: absorption member
70: controller
72A: CPU (example of processor)
110: calibration system
120: optical distance measurement device
130: VCSEL array
150: reflective member
152: first reflective member
154: second reflective member
156: third reflective member
B: light emitting region
B1: light emitting region (example of one light emitting portion)
B2: light emitting region (an example of another light emitting portion)
B3: light emitting region
L11: lens
L21: lens
L22: lens
SP: installation portion
Y: Y-axis direction (example of first direction)

## Claims

1. A calibration system comprising:
a first reflective member that is fixed to an installation portion for a distance measurement device and reflects light emitted from one light emitting portion among a plurality of light emitting portions that are included in the distance measurement device and are capable of emitting light in different directions;
a second reflective member that is fixed to a region different from a region, to which the first reflective member is fixed, in the installation portion for the distance measurement device, has a distance from the light emitting portions that is different from a distance of the first reflective member, and reflects light emitted from another light emitting portion; and
a processor configured to:
cause the one light emitting portion and the other light emitting portion to emit light with a time difference and calibrate the distance measurement device based on light reception results of a light receiving unit that receives reflected light by the first reflective member and reflected light by the second reflective member.

2. The calibration system according to claim 1,
wherein the distance measurement device includes a surface-emitting laser in which the plurality of light emitting portions are two-dimensionally arranged, and
the first reflective member and the second reflective member reflect light emitted from the light emitting portions that are arranged closer to a center than to an outer edge among the plurality of light emitting portions.

3. The calibration system according to claim 2,
wherein the first reflective member is fixed at a position that is farther away from the light emitting portion than the second reflective member and reflects light emitted from the light emitting portion that is closer to the center than the light emitting portion emitting light to the second reflective member.

4. The calibration system according to any one of claims 1 to 3,
wherein the first reflective member and/or the second reflective member is curved along an arc having, as a center, an optical system that deflects light emitted from the plurality of light emitting portions in different directions.

5. The calibration system according to any one of claims 1 to 4, further comprising:
an absorption member that is arranged between the first reflective member and the second reflective member and absorbs the reflected light.

6. The calibration system according to any one of claims 1 to 5,
wherein a plurality of distance measurement devices are capable of being installed in the installation portion to be arranged in a first direction,
the first reflective member corresponding to each distance measurement device is fixed to the installation portion along the first direction, and
the second reflective member corresponding to each distance measurement device is fixed to the installation portion along the first direction.

7. The calibration system according to claim 6, wherein the processor is configured to:
cause the one light emitting portion and the other light emitting portion to emit light with a time difference for each distance measurement device installed in the installation portion.

8. A calibration method comprising:
causing a first reflective member that is fixed to an installation portion for a distance measurement device to reflect light emitted from one light emitting portion included in the distance measurement device as first reflected light;
causing a second reflective member that is fixed to the installation portion for the distance measurement device to reflect light, which has been emitted from another light emitting portion included in the distance measurement device with a time difference with respect to the one light emitting portion, as second reflected light; and
calibrating the distance measurement device based on light reception results of the first reflected light and the second reflected light by a light receiving unit.
